# EUROPÄISCHE PATENTSCHRIFT

(11) **EP 1 083 295 B1**
(45) Veröffentlichungstag und Bekanntmachung des Hinweises auf die Patenterteilung: **16.11.2005**
(21) Anmeldenummer: 00810788.0
(22) Anmeldetag: 01.09.2000
(51) Int. Cl.: E21B 10/44

(54) **Bohrwerkzeug**
Drilling tool
Outil de forage

(30) Priorität: 09.09.1999 DE 19942985
(43) Veröffentlichungstag der Anmeldung: 14.03.2001
(73) Patentinhaber: HILTI Aktiengesellschaft, 9494 Schaan (LI)
(72) Erfinder: Kleine, Werner, 28832 München (DE); Bongers, Hans-Werner, 81477 München (DE)
(74) Vertreter: Wildi, Roland

(56) Entgegenhaltungen:
- EP-A- 0 351 493
- EP-A- 0 778 391
- EP-A- 0 884 448
- DE-A- 19 537 900
- DE-C- 19 653 155

## Beschreibung

Die Erfindung betrifft ein Bohrwerkzeug, insbesondere einen Gesteinsbohrer, gemäss dem Oberbegriff des Patentanspruchs 1.

Zur Erstellung von Bohrungen in Beton, Mauerwerk, Gestein und dgl. werden Bohrwerkzeuge eingesetzt, die einen Bohrkopf mit Schneiden aus einem Schneidwerkstoff, vorzugsweise aus einem Hartmetall, aufweisen. Die Bohrwerkzeuge werden üblicherweise in handgeführte Bohrgeräte eingesetzt, die zusätzlich zum Drehantrieb des Bohrwerkzeugs auch axiale Schläge erzeugen. Die axialen Schläge werden auf das in die Werkzeugaufnahme des Bohrgeräts eingesetzte Schaftende des Bohrwerkzeugs abgegeben und über den Schaft und den Bohrkopf in den zu bearbeitenden Untergrund eingeleitet. Auf diese Weise wird der Untergrund schabend, meisselnd bearbeitet und chipweise abgebaut. Neben den hohen Anforderungen hinsichtlich des erzielbaren Bohrfortschritts und erforderliches Kraftaufwands sollen die Bohrwerkzeuge auch eine möglichst hohe Standzeit aufweisen.

Aus dem Stand der Technik sind eine Reihe von Bohrwerkzeugen bekannt, die sich unter normalen Einsatzbedingungen durch einen zufriedenstellenden Bohrfortschritt bei vertretbarem Kraftaufwand auszeichnen. Auch die unter normalen Einsatzbedingungen erzielbaren Standzeiten dieser bekannten Bohrwerkzeuge sind akzeptabel. Ein derartiges Bohrwerkzeug ist beispielsweise in der EP-A-0 669 448 beschrieben. Dieses bekannte Bohrwerkzeug besitzt einen Schaft mit einem Einsteckende für ein handgeführtes Bohrgerät. Am gegenüberliegenden Ende ist ein Bohrkopf angeordnet, der drei Schneiden aufweist, die an sternförmig angeordneten Hartmetalleinsätzen vorgesehen sind. Die Schneiden sind durch Kopfmehlnuten voneinander getrennt, die in Abfuhrnuten für das Bohrmehl münden, die den Schaft wendelförmig umlaufen. Während dieses bekannte Bohrwerkzeug bei kleineren und mittleren Bohrerdurchmessern die insbesondere vom professionellen Anwender gestellten Anforderungen an sich erfüllt, besteht für Bohrwerkzeuge mit grösserem Durchmesser noch ein gewisses Verbesserungspotential. Insbesondere bei der Erstellung von Bohrungen in armiertem Beton kann es bei Armierungstreffern zu einem Verhaken des Bohrwerkzeuges kommen. Die Gefahr des Verhakens vergrössert sich mit zunehmendem Durchmesser des Bohrkopfes.

Aufgabe der vorliegenden Erfindung ist es daher, diesen Nachteilen der Bohrwerkzeuge des Standes der Technik abzuhelfen. Es soll ein Bohrwerkzeug geschaffen werden, bei dem, unabhängig vom Durchmesser des Bohrkopfes, auch bei der Erstellung von Bohrungen in armiertem Beton, die Gefahr eines Verhakens des Bohrkopfes am Armierungseisen verringert ist. Das Bohrwerkzeug soll einen guten Bohrfortschritt bei geringem Kraftaufwand besitzen und eine hohe Standzeit aufweisen.

Die Lösung dieser Aufgaben besteht in einem Bohrwerkzeug mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Das erfindungsgemässe Bohrwerkzeug, insbesondere ein Gesteinsbohrer, umfasst einen Schaft, dessen eines Ende an ein Einsteckende für die Werkzeugaufnahme eines Bohrgerätes anschliesst und dessen anderes Ende fest mit einem Bohrkopf verbunden ist. Der Bohrkopf weist wenigstens drei aus Hartmetall geformte Schneiden auf, wobei mindestens zwei benachbarte Schneiden, die am Umfang des Bohrkopfes angeordnet sind und diesen vorzugsweise überragen, miteinander einen Winkel einschliessen, der etwa 100° bis etwa 150° beträgt. Die Schneiden sind in Umfangsrichtung voneinander durch Kopfmehlnuten getrennt, welche in wenigstens eine, wendelförmig am Schaft umlaufende Abfuhrnut münden. Ein durch den radialen Überstand der Schneiden gegenüber dem Bohrkopf festgelegter Hüllkreis weist einen Durchmesser auf, der gleich oder grösser als 15 mm, vorzugsweise gleich oder grösser als 18 mm, ist. Die Kopfmehlnut, die zwischen den im Winkel von etwa 100° bis etwa 150° zueinander stehenden Schneiden verläuft, besitzt einen in Umfangsrichtung an den Führungsbereich angrenzenden Abschnitt, der einen Öffnungswinkel aufweist, für dessen Wert gilt α ≤ 100 - e und eine axiale Erstreckung besitzt, für die gilt , f > 0, vorzugsweise f > 0,2 x e.

Durch die erfindungsgemässe Ausbildung der Kolpfmehlnut, die zwischen den unter einem Winkel etwa 100° bis etwa 150° zueinander angestellten Schneiden verläuft, wird der bei Bohrwerkzeugen mit Bohrdurchmessern ab 15 mm und insbesondere bei grösseren Durchmessern ab 32 mm zunehmenden Tendenz des Bohrwerkzeugs zum Verhaken bei Armierungstreffern entgegengewirkt. Der Bohrkopf weist zwischen der bzw. den Kopfmehlnut(en) eine in Umfangsrichtung vergrösserte Führungsfläche auf. Durch das zusätzliche, am Bohrkopf verbleibende Material wird auch dessen Festigkeit erhöht. Die wirkt sich vorteilhaft auf die Standzeit des Bohrwerkzeugs aus. Im Fall von beispielsweise an Hartmetalleinsätzen angeordneten Schneiden sind die Hartmetalleinsätze besser in das Material des Bohrkopfes eingebettet und von diesem abgestützt. Dadurch können die Hartmetalleinsätze die im Betrieb auftretenden Querkräfte besser abführen und die Bruchgefahr bzw. die Gefahr eines Lösens der Hartmetalleinsätze ist verringert. Während bisher bei Bohrwerkzeugen des Standes der Technik davon ausgegangen wurde, dass mit wachsendem Durchmesser des Bohrwerkzeugs auch das pro Zeiteinheit geförderte Bohrvolumen anwächst, zeigt sich, dass dies nur bis zu einem gewissen Nenndurchmesser richtig ist. Beispielsweise ist gefunden worden, dass mit einem bekannten Bohrwerkzeug, insbesondere einem Bohrhammer, bei einem Nenndurchmesser von 25 mm das grösste Mehlvolumen gefördert wird. Bei einem Nenndurchmesser des Bohrwerkzeugs von beispielsweise 37 mm nimmt da geförderte Mehlvolumen wieder ab. Im Gegensatz zu der herrschenden Lehre, nach welcher der Querschnitt der Kopfmehlnut(en) proportional mit dem Durchmesser des Bohrwerkzeugs vergrössert werden muss, vermittelt die Erfindung die Lehre, dass ab einem Grenzdurchmesser des Bohrwerkzeugs der Querschnitt der Kopfmehlnut unterproportional anwächst oder sogar konstant bleibt. Durch die erfindungsgemässe Ausbildung bleibt auch bei grösseren Nenndurchmessern des Bohrwerkzeugs eine optimale Bohrmehlabfuhr erhalten. Indem die erfindungsgemässe Ausbildung insbesondere in einem axialen Abschnitt der Kopfmehlnut vorgesehen ist, der in Umfangsrichtung an den unterhalb der Schneiden verlaufenden axialen Führungsbereich am Bohrkopf angrenzt und sich über den definierten Minimalbereich erstreckt, wird der Tendenz von Bohrwerkzeugen mit grösseren Nenndurchmessern, bei Armierungstreffern zu verhaken, entgegengewirkt.

Für die Fördereigenschaften der gegenüber dem bekannten Stand der Technik hinsichtlich ihres Öffnungswinkels verkleinerten Kopfmehlnuten erweist es sich von Vorteil, wenn zwei, am Übergang zum Bohrkopfumfang an den Rand der Kopfmehlnut gelegte Tangenten einen Winkel miteinander einschliessen, der kleiner ist als 45° und vorzugsweise etwa 15° bis 30° beträgt.

Damit trotz der Vergrösserung der Führungsflächen in Umfangsrichtung am Bohrkopf die erfindungsgemäss ausgebildete Kopfmehlnut einen ausreichend grossen Querschnitt zur Förderung des im Betrieb von der zugehörigen Schneide abgebauten Bohrkleins aufweist, ist die Kopfmehlnut mit einer grössten Tiefe ausgebildet, deren Verhältnis zu einer grössten Breite der Kopfmehlnut grösser ist als 0,5 und vorzugsweise zwischen 0,6 und 0,9 beträgt.

Für den Öffnungswinkel der Kopfmehlnut, die zwischen den wenigstens zwei, in einem Winkel von etwa 100° bis etwa 150° zueinander angeordneten Schneiden verläuft, erweist sich ein Öffnungswinkel kleiner 60° als zweckmässig.

Das von den Schneiden abgebaute Bohrklein muss ausreichend schnell aus dem Eingriffsbereich der Schneiden entfernt und durch die Kopfmehlnuten und die wenigstens eine Abfuhrnut aus dem Bohrloch abtransportiert werden. Andererseits muss das abgebaute Bohrklein von den Schneiden ausreichend zerkleinert werden, damit die Gefahr, dass eine der Nuten verstopft, verringert ist. Dazu erweist es sich als zweckmässig, wenn die Kopfmehlnuten im Bereich des Bohrkopfes im wesentlichen axial verlaufen. Zudem sind im wesentlichen axial verlaufende Kopfmehlnuten auch aus fertigungstechnischer Sicht vorteilhaft.

Zur Verbesserung des Abtransports des von den Schneiden erzeugten Bohrkleins verlaufen am Schaft des Bohrwerkzeugs mit Vorteil mehrere, wendelförmig umlaufende Abfuhrnuten. Dabei mündet jede Kopfmehlnut in eine separate Abfuhrnut.

In einer hinsichtlich des erzielbaren Bohrfortschritts vorteilhaften Ausführungsvariante der Erfindung weist der Bohrkopf drei seinen Umfang radial überragende Schneiden auf, die voneinander jeweils durch Kopfmehlnuten getrennt sind.

In einer Abwandlung der Erfindung ist der Bohrkopf mit vier Schneiden ausgestattet, die den Umfang des Bohrkopfes radial überragen und jeweils paarweise in einem Winkel von etwa 100° bis etwa 150° zueinander angeordnet sind.

In fertigungstechnischer Hinsicht ist es vorteilhaft, wenn die Schneiden an einem sternförmigen bzw. X-förmigen, einstückig ausgebildeten Hartmetalleinsatz vorgesehen sind. Der Hartmetalleinsatz wird in einer entsprechend in der Stirnfläche des Bohrkopfes vorgesehenen Aussparung montiert und befestigt, beispielsweise eingelötet.

In einer alternativen Ausführungsvariante der Erfindung ist der Bohrkopf gesamthaft aus Hartmetall geformt. Ein Bohrkopf aus Hartmetall weist den Vorteil auf, dass er sehr einfach, mit nahezu beliebiger Formgebung herstellbar ist. Die Montage des einstückigen Bohrkopfes aus Hartmetall ist vereinfacht. Insbesondere entfallen die Aussparungen in der Stirnseite des Schafts. Der Bohrkopf wird beispielsweise durch Schweissen mit dem Schaft des Bohrwerkzeugs fest verbunden.

Im folgenden wird die Erfindung unter Bezugnahme auf in den Fig. schematisch dargestellte Ausführungsbeispiele näher erläutert. Es zeigen in nicht massstabsgetreuer Darstellung:
- Fig. 1: eine Draufsicht auf ein erstes Ausführungsbeispiel des Bohrwerkzeugs;
- Fig. 2: eine Seitenansicht des Bohrwerkzeugs gemäss Pfeil P in Fig. 1; und
- Fig. 3: eine Draufsicht auf ein zweites Ausführungsbeispiel des Bohrwerkzeugs.

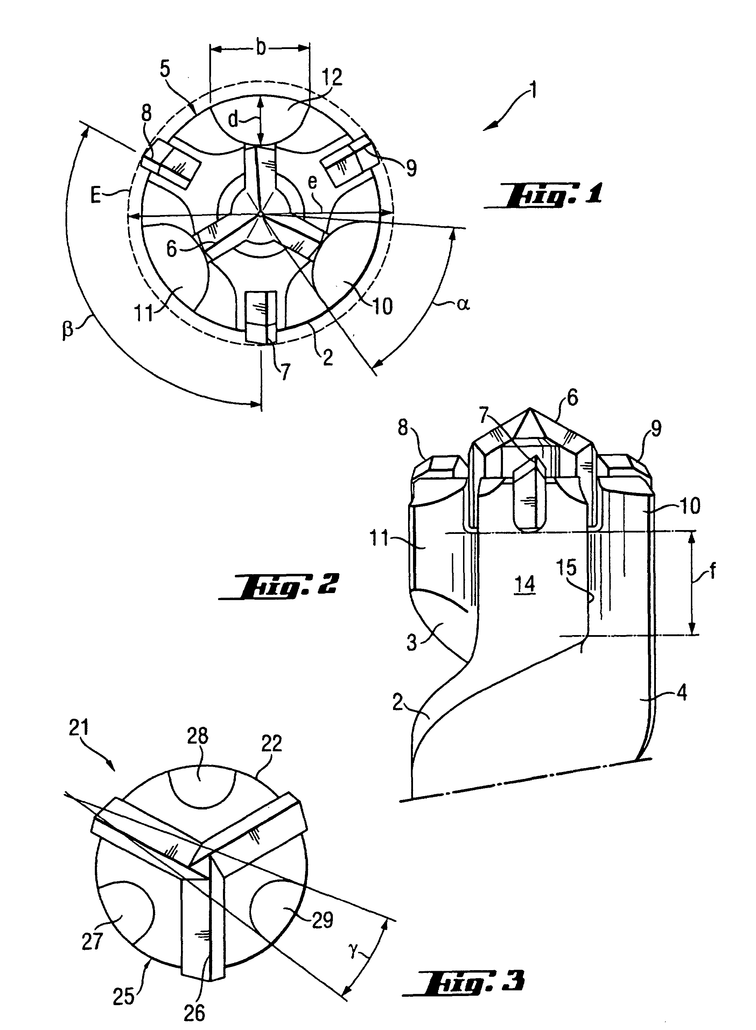

Das in Fig. 1 und 2 dargestellte Ausführungsbeispiel des erfindungsgemässen Bohrwerkzeugs trägt gesamthaft das Bezugszeichen 1. Es umfasst einen Schaft 2, dessen eines rückwärtiges Ende an ein Einsteckende für die Werkzeugaufnahme eines Handgeräts, insbesondere eines Bohrgeräts anschliesst. An seinem gegenüberliegenden Ende ist der Schaft 2 fest mit einem Bohrkopf 5 verbunden, der Schneiden 6 - 9 trägt, die aus einem Schneidwerkstoff, beispielsweise aus Hartmetall bestehen. Gemäss dem dargestellten Ausführungsbeispiel umfassen die Schneiden eine sternförmig ausgebildete, dreistrahlige Zentrumsschneide 6 und drei am Umfang angeordnete Schneiden 7 - 9, die beispielsweise alle den Umfang des Bohrkopfes 5 radial überragen. Die Schneiden 6 - 9 können, wie dargestellt, an plättchenförmigen Einsätzen ausgebildet sein, die in entsprechend ausgebildete Aussparungen in der Stirnfläche des Bohrkopfs 5 montiert sind. Die Schneiden können auch an einem Bohrkopf vorgesehen sein, der gesamthaft aus Hartmetall besteht und mit dem Schaft beispielsweise durch Schweissen fest verbunden ist. Unterhalb des Plattenfusses jeder Umfangsschneide 7 - 9 erstreckt sich am Bohrkopf 5 ein axialer Führungsbereich 14. Der Hüllkreis, den die Umfangsschneiden 7 - 9 bei der Rotation des Bohrwerkzeugs 1 beschreiben, ist strichliert angedeutet und mit dem Bezugszeichen E versehen und weist einen Durchmesser e auf. Die den Bohrkopf 5 überragenden drei Umfangsschneiden 7 - 9 sind zueinander in einem Winkel β angeordnet, der etwa 100° bis etwa 150° beträgt. Bei dem dargestellten Beispiel beträgt der Winkel etwa 120°. Die Umfangsschneiden 7 - 9 sind voneinander jeweils durch Kopfmehlnuten 10 - 12 getrennt, die an der Stirnseite des Bohrkopfs 5 münden und etwa in axialer Richtung verlaufen. Die Kopfmehlnuten 10 - 12 münden in Abfuhrnuten 3, 4, die wendelförmig umlaufend entlang des Schaftes 2 angeordnet sind. Dabei können die Kopfmehlnuten 10 - 12 beispielsweise alle in eine gemeinsame Abfuhrnut münden. Mit Vorteil ist für jede Kopfmehlnut 10 - 12 eine gesonderte Abfuhrnut vorgesehen.

Die Kopfmehlnuten 10 - 12 weisen einen von der Achse des Schafts 2 aus gemessenen Öffnungswinkel α auf, für dessen Wert gilt α ≤ 100 - e. Der Öffnungswinkel α gilt dabei für denjenigen Abschnitt 15 der Kopfmehlnut, der in Umfangsrichtung an den axialen Führungsbereich 14 angrenzt. Die axiale Erstreckung f des Abschnitts 15 der Kopfmehlnut entspricht dabei wenigstens der Länge des axialen Führungsbereichs 14 unterhalb der Umfangsschneiden 7 - 9 und ist grösser als 0, mit Vorteil grösser als 0,2 x e, wobei e den Durchmesser des Hüllkreises E der Umfangsschneiden 7 - 9 bezeichnet. Bei einem gesamthaft aus Hartmetall bestehenden Bohrkopf werden der Öffnungswinkel α und die axiale Erstreckung des Abschnitts der Kopfmehlnut, für die der Öffnungswinkel definiert ist, an dem gegenüber den Umfangsschneiden radial zurückgesetzten Abschnitt des Bohrkopfes gemessen. Vorzugsweise ist der Öffnungswinkel α der Kopfmehlnuten 10 - 12 kleiner als 60°. Die Kopfmehlnuten 10 - 12 weisen eine grösste Tiefe d auf, die zu einer grössten Breite b der Kopfmehlnuten 10 - 12 ein Verhältnis aufweist, das grösser ist als 0,5 und vorzugsweise zwischen 0,6 und 0,9 beträgt.

Fig. 3 zeigt eine Draufsicht auf ein zweites Ausführungsbeispiel des erfindungsgemässen Bohrwerkzeugs, das gesamthaft das Bezugszeichen 21 trägt. Zum Unterschied von dem ersten Ausführungsbeispiel weist der mit den Schaft 22 fest verbundene Bohrkopf 25 drei unter einem Winkel von etwa 120° zueinander angeordnete Umfangsschneiden auf, die integral mit den Zentrumsschneiden ausgebildet sind und an einem dreistrahlig sternförmigen Einsatz aus Hartmetall vorgesehen sind. Die drei strahlenförmig vom Zentrum zum Umfang verlaufenden Schneiden 26 überragen den Umfang des Bohrkopfes 25 und sind jeweils durch Kopfmehlnuten 27 - 29 voneinander getrennt, deren Öffnungswinkel wiederum kleiner ist als die Winkelerstreckung der zwischen den Kopfmehlnuten verlaufenden Bereiche des Bohrkopfes, in denen die Schneiden 26 verlaufen. Die Ausbildung der im wesentlichen axial verlaufenden Kopfmehlnuten 27 - 29 ist derart, dass zwei Tangenten, die im Einmündungsbereich der Kopfmehlnuten 27 - 29 in den Umfang des Bohrkopfes 25 an die Aussenkonturen der Kopfmehlnuten 27 - 29 gelegt sind, einen Winkel γ miteinander einschliessen, der kleiner ist als 45° und vorzugsweise etwa 15° bis 30° beträgt.

Die Erfindung ist am Beispiel von Bohrwerkzeugen geschildert worden, deren Bohrköpfe jeweils drei gleichmässig am Umfang angeordnete Umfangsschneiden aufweisen. Es versteht sich, dass die erfindungsgemässe Ausbildung der Kopfmehlnut auch bei Bohrwerkzeugen Anwendung finden kann, bei dem mehr als drei Umfangsschneiden vorgesehen sind. Beispielsweise kann der Bohrkopf vier Umfangsschneiden aufweisen, die jeweils paarweise unter einem Winkel von etwa 100° bis etwa 150° angeordnet sind. In diesem Fall bezieht sich die erfindungsgemässe Ausbildung auf diejeingen Kopfmehlnuten, die zwischen diesen Schneidenpaaren verlaufen.

## Patentansprüche

1. Bohrwerkzeug, insbesondere Gesteinsbohrer, mit einem Schaft (2; 22), dessen eines Längsende an ein Einsteckende für die Werkzeugaufnahme eines Bohrgerätes anschliesst und dessen anderes Längsende mit einem Bohrkopf (5; 25) fest verbunden ist, der wenigstens drei aus Hartmetall geformte Schneiden (7 - 9; 26) aufweist, die am Umfang des Bohrkopfs (5; 25) angeordnet sind und wenigstens teilweise an einen axial anschliessenden Führungsbereich (14) des Bohrkopfes (5; 25) angrenzen, wobei mindestens zwei benachbarte Schneiden, die am Umfang des Bohrkopfes (5; 25) angeordnet sind und diesen vorzugsweise überragen, miteinander einen Winkel, (β), von etwa 100° bis etwa 150° einschliessen und in Umfangsrichtung voneinander durch eine oder mehrere Kopfmehlnuten (10 - 12; 27 - 29) getrennt sind, welche in wenigstens eine, wendelförmig am Schaft (2) umlaufende Abfuhrnut (3, 4) münden, **dadurch gekennzeichnet, dass** ein durch den radialen Überstand wenigstens einer der Schneiden (7 - 9; 26) gegenüber dem Bohrkopf (5; 25) festgelegter Hüllkreis, E, einen Durchmesse, e, aufweist, der gleich oder grösser als 15 mm, vorzugsweise gleich oder grösser als 18 mm, ist, und diejenige Kopfmehlnut (10,-12; 27-29), die zwischen den im Winkel, β, von etwa 100° bis etwa 150° zueinander angeordneten Schneiden (7 - 9; 26) verläuft, einen in Umfangsrichtung an den axialen Führungsbereich (14) angrenzenden Abschnitt (15) besitzt, der einen Öffnungswinkel, α, aufweist, für dessen Wert gilt α ≤ 100 - e, und eine axiale Erstreckung f besitzt, für die gilt f > 0, vorzugsweise f > 0,2 x e, wobei α in Grade und e in mm ausgedruckt sind.

2. Bohrwerkzeug nach Anspruch 1, **dadurch gekennzeichnet, dass** zwei am Übergang zum Bohrkopfumfang an den Rand der Kopfmehlnut (29) gelegte Tangenten einen Winkel, γ, miteinander einschliessen, der kleiner ist als 45° und vorzugsweise etwa 15° bis 30° beträgt.

3. Bohrwerkzeug nach Anspruch 1 oder 2, **dadurch gekennzeichnet, dass** die Kopfmehlnut (10 - 12; 27 - 29) eine grösste Tiefe, d, aufweist, deren Verhältnis zu einer grössten Breite, b, der Kopfmehlnut grösser ist als 0,5 und vorzugsweise zwischen 0,6 und 0,9 beträgt.

4. Bohrwerkzeug nach einem der vorangehenden Ansprüche, **dadurch gekennzeichnet, dass** der Öffnungswinkel, α, der Kopfmehlnuten (10 - 12; 27 - 29) kleiner als 60° ist.

5. Bohrwerkzeug nach einem der vorangehenden Ansprüche, **dadurch gekennzeichnet, dass** die Kopfmehlnuten (10 - 12; 27 - 29) im Bereich des Bohrkopfes (5; 25) im wesentlichen axial verlaufen.

6. Bohrwerkzeug nach einem der vorangehenden Ansprüche, **dadurch gekennzeichnet, dass** entlang des Schaftes (2) mehrere wendelförmig verlaufende Abfuhrnuten (3, 4) angeordnet sind und jede Kopfmehlnut (10 - 12) in eine separate Abfuhrnut (3, 4) mündet.

7. Bohrwerkzeug nach einem der vorangehenden Ansprüche, **dadurch gekennzeichnet, dass** der Bohrkopf (5; 25) drei Schneiden (7 - 9; 26) aufweist die dem Umfang des Bohrkopfes (5; 25) radial überragen und jeweils durch eine Kopfmehlnut (10 - 12; 27 - 29) voneinander getrennt sind.

8. Bohrwerkzeug nach einem der Ansprüche 1 - 6, **dadurch gekennzeichnet, dass** vier Schneiden vorgesehen sind, die jeweils paarweise miteinander einen Winkel, β, einschliessen, der etwa 100° bis etwa 150° beträgt.

9. Bohrwerkzeug nach einem der vorangehenden Ansprüche, **dadurch gekennzeichnet, dass** die Schneiden (26) an einem sternförmigen, einstückig ausgebildeten Hartmetalleinsatz vorgesehen sind.

10. Bohrwerkzeug nach einem der Ansprüche 1 - 8, **dadurch gekennzeichnet, dass** der Bohrkopf gesamthaft aus Hartmetall geformt ist.

## Claims

1. Drilling tool, in particular rock drill, comprising a shank (2; 22), one longitudinal end of which is connected to an insertion end for the tool holder of a drill and the other longitudinal end of which is rigidly connected to a drill head (5; 25) having at least three carbide cutting bits (7 - 9; 26) arranged on the circumference of the drill head (5; 25) and at least partially adjoining an axially adjacent guide region (14) of the drill head (5; 25), at least two adjacent cutting bits arranged on the circumference of the drill head (5; 25) and preferably projecting beyond the latter including an angle, β, of approximately 100° to approximately 150° with one another and being separated from one another in the circumferential direction by one or more head grooves (10 - 12; 27 - 29) for drillings opening into at least one discharge groove (3, 4) extending helically around the shank (2), **characterised in that** an enveloping circle, E, defined by the radial projection of at least one of the cutting bits (7 - 9; 26) relative to the drill head (5; 25) has a diameter, e, which is equal to or greater than 15 mm, preferably equal to or greater than 18 mm, and the head groove (10 - 12; 27 - 29) for drillings extending between the cutting bits (7 - 9; 26) arranged at the angle, β, of approximately 100° to approximately 150° relative to one another has a portion (15) adjoining the axial guide region (14) in the circumferential direction having an aperture angle, α, where α ≤100 - e and an axial extent, f, where f > 0, preferably f > 0.2 x e, with α being expressed in degrees and e being expressed in mm.

2. Drilling tool according to claim 1, **characterised in that** two tangents to the edge of the head groove (29) for drillings at the transition to the circumference of the drill head include an angle, γ, with one another which is less than 45° and is preferably approximately 15° to 30°.

3. Drilling tool according to claim 1 or claim 2, **characterised in that** the head groove (10 - 12; 27 - 29) for drillings has a maximum depth, d, the ratio of which to a maximum width, b, of the head groove for drillings is greater than 0.5 and is preferably between 0.6 and 0.9.

4. Drilling tool according to one of the preceding claims, **characterised in that** the aperture angle, α, of the head grooves (10 - 12; 27 - 29) for drillings is less than 60°.

5. Drilling tool according to one of the preceding claims, **characterised in that** the head grooves (10 - 12; 27 - 29) for drillings extend substantially axially in the region of the drill head (5; 25).

6. Drilling tool according to one of the preceding claims, **characterised in that** a plurality of helically extending discharge grooves (3, 4) are arranged along the shank (2) and each head groove (10 - 12) for drillings opens into a separate discharge groove (3, 4).

7. Drilling tool according to one of the preceding claims, **characterised in that** the drill head (5; 25) has three cutting bits (7 - 9; 26) projecting radially beyond the circumference of the drill head (5; 25) and each separated from one another by a head groove (10 - 12; 27 - 29) for drillings.

8. Drilling tool according to one of claims 1 - 6, **characterised by** four cutting bits including an angle, β, of approximately 100° to approximately 150° with one another in pairs.

9. Drilling tool according to one of the preceding claims, **characterised in that** the cutting bits (26) are provided on a star-shaped carbide insert formed in one piece.

10. Drilling tool according to one of claims 1 - 8, **characterised in that** the drill head is formed entirely of carbide.

## Revendications

1. Foret, en particulier foret pour roche, avec une tige (2 ; 22) dont une extrémité longitudinale est raccordée à une extrémité insérable destinée au mandrin d'outil d'un outil de forage et dont l'autre extrémité longitudinale est solidarisée à une tête de forage (5 ; 25) qui comporte au moins trois taillants (7-9 ; 26) qui sont réalisés en métal dur, qui sont disposés sur la circonférence de la tête de forage (5 ; 25) et qui sont au moins en partie adjacents à une zone de guidage (14) située dans le prolongement axial de la tête de forage (5 ; 25), au moins deux taillants voisins, qui sont disposés sur la circonférence de la tête de forage (5 ; 25) et de préférence dépassent celle-ci, formant entre eux un angle, β, d'environ 100° à environ 150° et étant séparés l'un de l'autre dans la direction circonférentielle par une ou plusieurs gorges à poussière de tête (10-12 ; 27-29) qui débouchent dans au moins une gorge d'évacuation (3, 4), laquelle s'étend en hélice autour de la tige (2), **caractérisé en ce qu'**un cercle d'enveloppe, E, défini par le débordement radial d'au moins un des taillants (7-9 ; 26) par rapport à la tête de forage (5 ; 25) possède un diamètre qui est égal ou supérieur à 15 mm, de préférence égal ou supérieur à 18 mm, et la gorge à poussière de tête (10-12 ; 27-29) qui passe entre les taillants (7-9 ; 26) disposés selon un angle, β, d'environ 100° à environ 150° l'un par rapport à l'autre possédant une portion (15) qui est adjacente dans la direction circonférentielle à la zone de guidage axiale (14) et qui présente un angle d'ouverture, α, dont la valeur est α ≤ 100 - e et qui possède une extension axiale, f, telle que f > 0, de préférence f > 0,2 x e, α étant exprimé en degrés et e l'étant en mm.

2. Foret selon la revendication 1, **caractérisé en ce que** deux tangentes au bord de la gorge à poussière de tête (29) tracées au niveau de la transition avec la circonférence de la tête de forage forment entre elles un angle, γ, qui est inférieur à 45° et, de préférence, compris entre environ 15° à 30°.

3. Foret selon la revendication 1 ou 2, **caractérisé en ce que** la gorge à poussière de tête (10-12 ; 27-29) présente une profondeur maximale, d, dont le rapport à une largeur maximale, b, de la gorge à poussière de tête est supérieur à 0,5 et, de préférence, compris entre 0,6 et 0,9.

4. Foret selon une des revendications précédentes, **caractérisé en ce que** l'angle d'ouverture, α, des gorges à poussière de tête (10-12 ; 27-29) est inférieur à 60°.

5. Foret selon une des revendications précédentes, **caractérisé en ce que**, dans la zone de la tête de forage (5 ; 25), les gorges à poussière de tête (10-12 ; 27-29) s'étendent sensiblement axialement.

6. Foret selon une des revendications précédentes, **caractérisé en ce que** le long de la tige (2) sont ménagées plusieurs gorges d'évacuation à tracé hélicoïdal (3, 4) et chaque gorge à poussière de tête (10-12) débouche dans une gorge d'évacuation séparée (3, 4).

7. Foret selon une des revendications précédentes, **caractérisé en ce que** la tête de forage (5 ; 25) comporte trois taillants (7-9 ; 26) qui dépassent radialement de la circonférence de la tête de forage (5 ; 25) et qui, à chaque fois, sont séparés l'un de l'autre par une gorge à poussière de tête (10-12 ; 27-29).

8. Foret selon une des revendications 1 à 6, **caractérisé en ce qu'**il est prévu quatre taillants qui forment entre eux, par paires, un angle, β, d'environ 100° à environ 150°.

9. Foret selon une des revendications précédentes, **caractérisé en ce que** les taillants (26) sont disposés sur un élément rapporté en métal dur, en forme d'étoile, réalisé d'un seul tenant.

10. Foret selon une des revendications 1 à 8, **caractérisé en ce que** la tête de forage est entièrement réalisée en métal dur.
